# EUROPEAN PATENT SPECIFICATION

(11) **EP 4 309 924 B1**
(45) Date of publication and mention of the grant of the patent: **02.12.2026**
(21) Application number: 22315162.2
(22) Date of filing: 20.07.2022
(51) Int. Cl.: B60G 17/0165, B60G 21/073

(54) **A UTILITY VEHICLE**
NUTZFAHRZEUG
VÉHICULE UTILITAIRE

(43) Date of publication of application: 24.01.2024
(73) Proprietor: CNH Industrial France S.A.S., 91150 Morigny-Champigny (FR)
(72) Inventor: Simon, Vincent, 85220 La Chapelle Hermier (FR)
(74) Representative: CNH Industrial IP Department

(56) References cited:
- FR-A1- 2 609 262
- US-A- 5 684 698

## Description

### TECHNICAL FIELD

The present invention relates to a utility vehicle such as a grape harvester

### BACKGROUND

Utility vehicles such as grave harvesters make use of suspension systems to redistribute the weight of such vehicles when travelling over different terrain. This is particularly important when there is a difference is traction between the wheels on one side of the vehicle and the ground and between the wheels on the other side of the vehicle such that there is an imbalance of weight across the vehicle and unwanted and potentially dangerous lateral sliding of the vehicle occurs.

Such a difference in traction can occur (i) because there is less friction between the wheels on one side of the vehicle and the ground than between the other wheels and the ground, e.g. because the terrain type is different or (ii) because there is a lateral tilt to the ground such that the wheels on one side of the vehicle are arranged below the other wheels of the vehicle, and more of the vehicle weight is focused on the lower wheels. It should be noted that, because lateral sliding of steerable wheels can be compensated by steering the steerable wheels on the opposite direction, this sliding problem is particularly problematic for the non-steerable wheels of such vehicles.

To try to overcome the problems relating to lateral tilt, EP 0783984 A2 discloses a utility vehicle comprising a main frame, four wheels including two front wheels and two rear wheels, and a hydraulic suspension system for adjusting the position of each of the wheels relative to the main frame. When the utility vehicle is arranged on e.g. a right-tilted lateral slant (i.e. when the right wheels of the utility vehicle are positioned under the left wheels), the operator can compensate for the change in the centre of gravity of the vehicle brought about by the lateral slant by controlling the hydraulic suspension system to push the right wheels away from the main frame and pull the left wheels closer to the main frame. Consequently, the frame of the vehicle is tilted to the left, which somewhat compensates for the unwanted tilting effect brought about by the lateral slope. The opposite procedure is performed when the vehicle is arranged on a left-tilted lateral slant too. It has been noticed however that on relatively large lateral slopes, such as those having a 15% inclination or more, some lateral drift of the wheels may still be experienced.

US 5 684 698 A describes an attitude control apparatus for a vehicle with a body and a plurality of wheels supported by associated suspensions with actuators operated by a fluid for expanding each suspension to control the stroke of each wheel.

It is an aim of the present invention to address one or more disadvantages associated with the prior art.

### SUMMARY OF THE INVENTION

According to an aspect of the invention there is provided a utility vehicle comprising:
a vehicle frame;
at least four wheels comprising left and right steerable wheels and left and right non-steerable wheels;
a hydraulic system comprising:
   a left hydraulic cylinder coupling the left steerable wheel to the vehicle frame,
   a right hydraulic cylinder coupling the right steerable wheel to the vehicle frame,
   a left accumulator coupled to the left hydraulic cylinder,
   a right accumulator coupled to the right hydraulic cylinder, and
   a fluid supply configured to supply fluid to either one of the left and right hydraulic cylinders;
a sensor configured to detect a right lateral slope condition wherein the right non-steerable wheel is positioned below the left non-steerable wheel, and
a control system operably coupled to the sensor and to the hydraulic system, the control system being configured to increase a downward pressure on the right steerable wheel when the right lateral slope condition is detected by controlling the fluid supply to supply fluid to either one of the left and right hydraulic cylinders.

When the right lateral slope condition is detected, the right non-steerable wheel is positioned below the left non-steerable wheel. By increasing downward pressure on the right steerable wheel, the weight of the vehicle is shifted towards the opposite wheel to the right steerable wheel, i.e. towards the left non-steerable wheel. As a result, this left non-steerable wheel is better adhered to the ground, and the risk of lateral drift is mitigated. This compensating effect helps to reduce sliding even on relatively large lateral slopes, such as those having a 15% inclination or more. Furthermore, hydraulic cylinders are only provided on the steerable wheels to achieve this effect.

The control system may be further configured to decrease a downward pressure on the left steerable wheel when the right lateral slope condition is detected.

The left and right hydraulic cylinders may each comprise a head end and a rod end. In one embodiment, the left and right steerable wheels are mechanically connected to the rod ends of the respective hydraulic cylinders, the left and right accumulators being are connected to the rod ends of the respective hydraulic cylinders, and the head ends of the respective hydraulic cylinders are fluidly connected to each other. The fluid supply may be couplable to the rod ends of the respective hydraulic cylinders. The control system may be configured to couple the fluid supply to the rod end of the left hydraulic cylinder and to supply fluid thereto, when the right lateral slope condition is detected.

When the rod end of the left hydraulic cylinder is supplied with fluid, there is an increase in upward pressure on the left piston. Due to the arrangement of the accumulators on the rod ends of the hydraulic cylinders and the common conduit between the hydraulic cylinders on the head ends thereof, the increase in upward pressure on the left piston, results in an increase in downward pressure on the right piston, and hence an increase in downward pressure on the right steerable wheel.

The hydraulic system may further comprise: a right valve arrangeable in a closed position, wherein the fluid supply is prevented from supplying fluid to the right hydraulic cylinder, and in an open position, wherein the fluid supply supplies fluid to the right hydraulic cylinder, and a left valve arrangeable in a closed position, wherein the fluid supply is prevented from supplying fluid to the left hydraulic cylinder , and in an open position, wherein the fluid supply supplies fluid to the left hydraulic cylinder.

In this embodiment, the control system may be configured to arrange the left valve in the open position and the right valve in the closed position when the right lateral slope condition is detected.

The fluid supply may comprise a store of fluid, and a pump for delivering the fluid. Preferably, the fluid supply comprises a pressure relief valve ensuring the pressure of the hydraulic system does not exceed a threshold value.

In one embodiment, the hydraulic system further comprises a common accumulator coupled between both hydraulic cylinders. Changes in stiffness across the suspension system can made by adjusting the common accumulator.

The sensor may comprise a lateral slope indicator or a GPS device. Such a sensor allows the utility vehicle to adapt to a lateral tilt of the terrain automatically. Alternatively, the sensor may sense the input of an operator by way of an input interface.

In one preferred embodiment, the sensor is further configured to measure the inclination of the right lateral slope when the right lateral slope condition is detected, and wherein the increase in downward pressure on the right steerable wheel depends on the measured inclination of the right lateral slope. Look up tables may be used to this end.

### BRIEF DESCRIPTION OF THE DRAWINGS

Embodiments of the invention will now be described by way of example with reference to the accompanying drawings, in which:
Figure 1 shows a side view of a utility vehicle comprising a hydraulic system in accordance with the invention.
Figure 2 shows a front view of the utility vehicle of Figure 1.
Figure 3 shows a schematic representation of the hydraulic system of Figure 1, wherein the hydraulic system provides an increase in downward pressure on the right steerable wheel.
Figure 4 shows a schematic representation of the hydraulic system of Figure 1, wherein the hydraulic system provides an increase in downward pressure on the left steerable wheel.
Figure 5 shows a schematic representation of an alternative embodiment of the hydraulic system of Figures 3 and 4, wherein the hydraulic system is arranged in a stiffness adjusting mode.
Figure 6 shows a schematic representation of an alternative embodiment of the hydraulic system of Figures 3 and 4, wherein the hydraulic system is arranged in a slide compensating mode.

### DETAILED DESCRIPTION

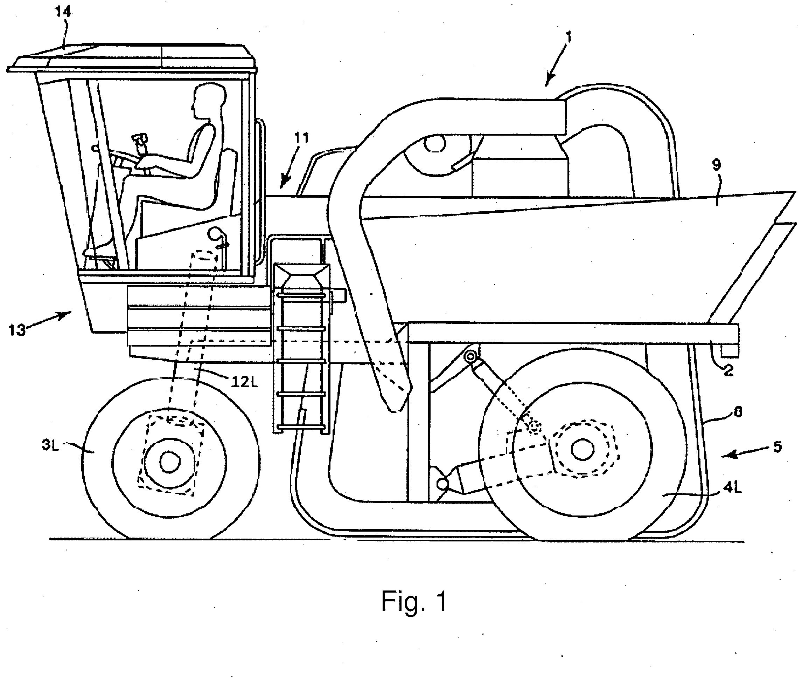

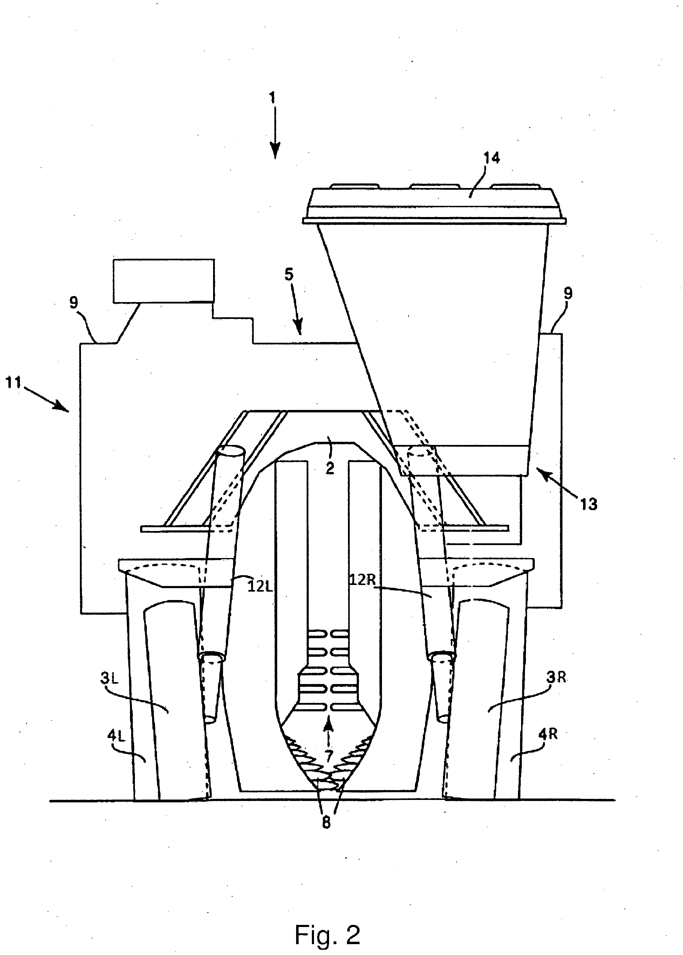

Figures 1 and 2 show a utility vehicle 1 in the form of a grape harvester comprising a chassis or vehicle frame 2 and four wheels 3, 4 coupled to said vehicle frame 2. The four wheels 3, 4 include a front left wheel 3L, a front right wheel 3R, a rear left wheel 4L and a rear right wheel 4R.

The front wheels 3 are steerable, i.e. an operator of the utility vehicle 1 can control the direction of said wheels e.g. by controlling a steering wheel 3 of the utility vehicle 1, while the rear wheels 4 are non-steerable, i.e. an operator of the utility vehicle 1 cannot control the control the direction of said wheels e.g. said wheels 4 are always directed straight ahead. Both the front wheels 3 and the rear wheels 4 are driven for moving the vehicle frame 2 over the ground. The vehicle frame 2 is in the form of a gantry for straddling a row of plants, such as grape-vines.

In a known manner, the frame 2 carries a harvesting assembly 5, comprising a shaker assembly 7 for detaching the grapes from the vines and two elevator conveyors 8 for collecting the detached grapes and conveying them to two storage tanks 9 on the sides of vehicle 1. The frame 2 further carries an engine 11, providing the power necessary to drive the various active members of the harvesting assembly 5.

The harvesting assembly 5 may be fixed in a permanent manner to the main frame 2 of the machine, or else, it may be made in the form of a removable assembly which is detachably affixed to the main frame 2, so as to be capable of being replaced by other equipment or accessories, such as spraying and pruning equipment, and equipment for tilling the ground.

The driving and harvesting functions of the vehicle are controlled by the operator from an operator's platform 13, which is attached to the front portion of the frame 2. To increase the comfort of the operator, an environmentally insulated cab 14 is provided which surrounds the operator's platform 13.

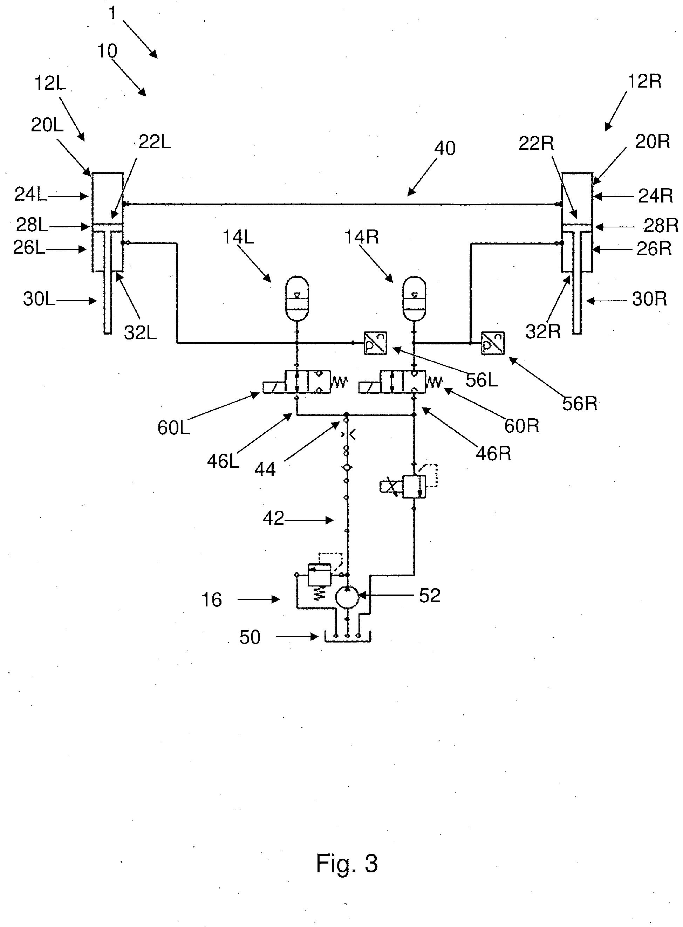

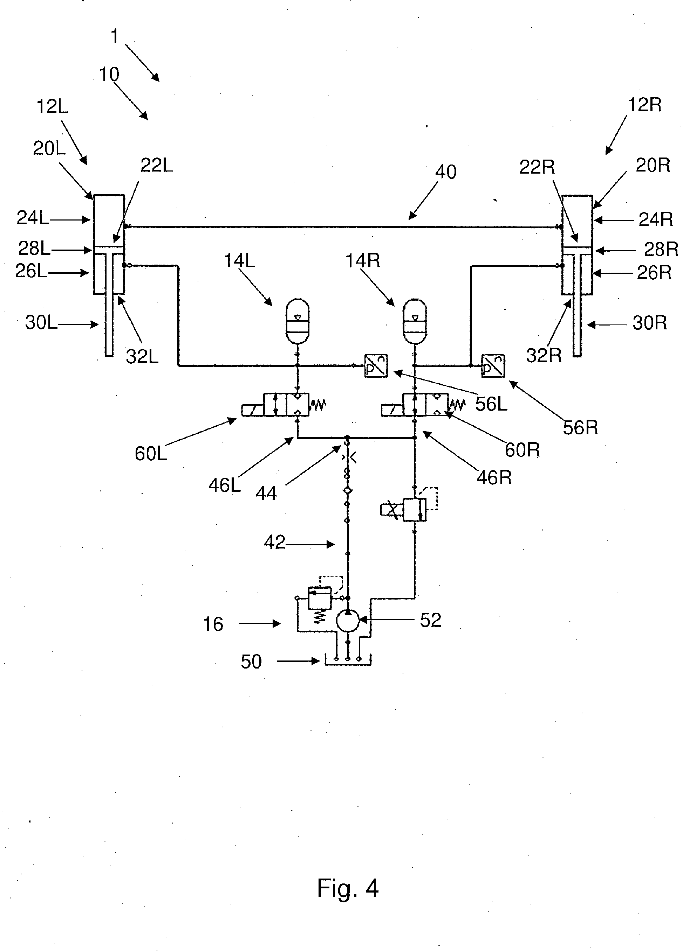

The utility vehicle 1 is provided with a hydraulic suspension system 10 - shown in Figures 3 and 4 - for controlling the position of the vehicle frame 2 relative to the wheels 3, 4 of the utility vehicle 1 to mitigate the risk of sliding on lateral slopes, i.e. when the right side of the utility vehicle 1, i.e. the right wheels 3R, 4R, of the utility vehicle 1, is positioned below the left side of the utility vehicle 1, i.e. the left wheels 3L, 4L of the utility vehicle 1, or vice versa.

To control the position of the vehicle frame 2 relative to the wheels 3, 4, the hydraulic system 10 is provided with a left hydraulic cylinder 12L coupling the left steerable wheel 3L to the vehicle frame 2, a right hydraulic cylinder 12R coupling the right steerable wheel 3R to the vehicle frame 2, a left accumulator 14L coupled to the left hydraulic cylinder 12L, a right accumulator 14R coupled to the right hydraulic cylinder 12R, and a fluid supply 16 configured to supply fluid to either one of the left and right hydraulic cylinders 12L, 12R.

Additionally, the utility vehicle 1 is provided with a sensor (not shown) configured to detect a lateral slope condition of the utility vehicle 1 and a control system (not shown) operably coupled to the sensor and the hydraulic system 10 for controlling the hydraulic system 10 based on the detected lateral slope condition. The lateral slope condition may either be a right lateral slope condition, wherein the right side of the utility vehicle 1 is positioned below the left side of the utility vehicle 1, or a left lateral slope condition, wherein the left side is positioned below the right side.

Depending on the lateral slope condition detected by the sensor, the control system causes the fluid supply 16 to supply fluid to either one of the left and right hydraulic cylinders 12L, 12R, so as to apply a downward pressure on one of the wheels 3, 4. In particular, when the right lateral slope condition is detected, the control system increases a downward pressure on the right steerable wheel 3R, while when the left lateral slope condition is detected, the control system increases a downward pressure on the left steerable wheel 3L. This application of downward pressure mitigates the risk of the utility vehicle 1 sliding on lateral slopes.

For example, when the right lateral slope condition is detected, the right non-steerable wheel 4R is positioned below the left non-steerable wheel 4L. By increasing downward pressure on the right steerable wheel 3R, the weight of the vehicle is shifted from the right steerable wheel 3R towards the opposite wheel of the utility vehicle 1, i.e. towards the left non-steerable wheel 4L. As a result, this left non-steerable wheel 4L is better adhered to the ground, and the risk of lateral drift is reduced. This compensating effect even helps to reduce sliding on relatively large lateral slopes, such as those having a 15% inclination or more.

The same but opposite compensating effect is also achieved when the left lateral slope condition is detected.

Furthermore, this hydraulic system 10 only acts on two of the wheels of utility vehicle 1, i.e. on the steerable wheels 3. No action on the non-steerable wheels 4 is needed because only the action on the steerable wheels 3 is needed to counteract the lateral sliding of utility vehicles 1 on such lateral slopes.

More details about each of the components of the hydraulic system 10 will now be provided with further reference to Figures 3 and 4.

First the hydraulic cylinders 12L, 12R and the accumulators 14L, 14R of the hydraulic system 10 will be described.

The left and right hydraulic cylinders 12L, 12R may be any suitable hydraulic cylinders 12L, 12R. In one embodiment, each cylinder 12L, 12R comprises a substantially cylindrical housing 20L, 20R that defines a substantially cylindrical internal volume and a rod 22L, 22R arranged within the internal volume of the cylinders. The rod 22L, 22R is configured to slide along a length of said substantially cylindrical housing 20L, 20R. The housing 20L, 20R is securely mounted to the vehicle frame 2, while the rod 22L, 22R is mechanically connected to one of the left and right steerable wheels 3L, 3R.

The rod 22L, 22R divides each cylinder 12L, 12R into two separate parts: a head end 24L, 24R and a rod end 26L, 26R. This is because the rod 22L, 22R includes a substantially circular piston 28L, 28R that extends across a cross section of the cylindrical internal volume at all positions of the rod 22L, 22R within the housing 20L, 20R. Moreover, the piston 28L, 28R has substantially the same dimensions as the cross section of the cylindrical internal volume such that hydraulic fluid cannot pass between the head and rod end 24, 26 of the cylinder 12L, 12R, and the two ends 24, 26 form distinct compartments within the cylinder 12L, 12R.

To connect the rod 22L, 22R to the respective wheel 3, the rod 22L, 22R is provided with an elongated tail portion 30L, 30R that extends away from the piston 28L, 28R at a first end thereof and connects to a wheel 3 at a second end thereof. The part of the cylinder 12L, 12R that includes said tail portion 30L, 30R is the rod end 26L, 26R of the cylinder 12L, 12R, while the other part of the cylinder 12L, 12R is the head end 24L, 24R.

Between the first and second ends of the tail portion 30L, 30R 30L, 30R, the tail portion 30L, 30R of the rod 22L, 22R extends out of the cylinder 12L, 12R through a tail aperture 32L, 32R in the rod end 26L, 26R of the cylinder 12L, 12R. The tail portion 30L, 30R has the same dimensions as the tail aperture 32L, 32R such that hydraulic fluid does not escape from the tail aperture 32L, 32R regardless of the position of the rod 22L, 22R with respect to the housing 20L, 20R.

Depending on the position of the rod 22L, 22R within the cylinder 12L, 12R, the position of the wheel 3 with respect to the vehicle frame 2 changes. In particular, when there is an increase in pressure in the hydraulic fluid in the head end 24L, 24R of the cylinder 12L, 12R, the fluid applies a downward pressure on the rod 22L, 22R and hence on the wheel 3 connected thereto, pushing the wheel 3 away from the vehicle frame 2. Meanwhile, when there is an increase in hydraulic pressure in the rod end 26L, 26R of the cylinder 12L, 12R, the fluid applies an upward pressure on the rod 22L, 22R and hence on the wheel 3 connected thereto, pulling the wheel 3 towards the vehicle frame 2.

The left and right accumulators 14L, 14R may be any suitable accumulators and may be coupled to the left and right cylinders 12L, 12R in any suitable way. The accumulators 14L, 14R are pressure storage reservoirs in which the hydraulic fluid is held under pressure.

In Figures 3 and 4, each of the left and right accumulators 14L, 14R is fluidly connected to the rod end 26L, 26R of the respective hydraulic cylinder 12L, 12R. The accumulators 14L, 14R assist in allowing the rods 22L, 22R to move within the housing 20L, 20R of the cylinder 12L, 12R when there is an increase in pressure in hydraulic fluid in one of the ends 24, 26 of the hydraulic cylinders 12L, 12R.

In this configuration, the head ends 24L, 24R of the respective hydraulic cylinders 12L, 12R are fluidly connected to each other. To this end, the hydraulic system 10 is provided with a common conduit 40 that extends between the head ends 24L, 24R of the two hydraulic cylinders 12L, 12R.

Now, that the hydraulic cylinders 12L, 12R and the accumulators 14L, 14R have been described, an overview of the fluid supply 16 will be provided.

The fluid supply 16 comprises a store 50 of hydraulic fluid, a pump 52 for delivering the hydraulic fluid, and left and right supply paths for providing hydraulic fluid pumped from the store 50 into each of the left and right hydraulic cylinders 12L, 12R.

As shown in Figures 3 and 4, the left and right paths share a common supply conduit 42 extending from the pump 52. At a supply diverging junction 44, the common supply conduit 42 then splits into left and right supply conduits 46L, 46R. Each of these left and right supply conduits 46L, 46R feeds into the rod end 26L, 26R of the respective hydraulic cylinder 12L, 12R. In other embodiments these conduits 46L, 46R can be completely separate. The accumulators 14L, 14R can be arranged at any location along the left and right supply conduits 46L, 46R.

The fluid supply 16 is also provided with a pressure relief valve 54 that is coupled to the common supply conduit 42. This pressure relief valve 54 ensures the pressure of the hydraulic system 10 does not exceed a threshold value. In particular, the fluid supply 16 is provided with left and right pressure transducers 56L, 56R for measuring the pressure in the left and right supply conduits 46L, 46R, so as to ensure that the pressure within the rod end 26L, 26R of the hydraulic cylinders 12L, 12R does not exceed the threshold value, potentially damaging the cylinders 12L, 12R. To this end, the left and right pressure transducers 56L, 56R are each arranged at any location along the left and right supply conduits 46L, 46R, but are each preferably arranged between the respective accumulator 14L, 14R and hydraulic cylinder 12L, 12R. When the measured pressure within the rod end 26L, 26R of the hydraulic cylinders 12L, 12R exceeds the threshold valve, the pressure relief valve 54 releases hydraulic fluid from the hydraulic system 10, so as to bring the pressure down in the system 10.

All conduits of the hydraulic system 10 may be pipes, tubes or hoses as appropriate. The hydraulic fluid may be any suitable fluid.

As stated above, the fluid supply 16 is couplable to the rod ends 26L, 26R of the respective hydraulic cylinders 12L, 12R. To this end, the hydraulic system 10 is provided with a left valve 60L to act on the left supply conduit 46L between the fluid supply 16 and the left accumulator 14L, and a right valve 60R to act on the right supply conduit 46R between the fluid supply 16 and the right accumulator 14R. The left and right valves 60L, 60R are each preferably arranged such that the respective cylinder 12L, 12R, accumulator 14L, 14R and pressure transducer 56L, 56R can be separated from the fluid supply 16.

The left valve 60L is arrangeable in a closed position, wherein the fluid supply 16 is prevented from supplying fluid to the left hydraulic cylinder 12L, and in an open position, wherein the fluid supply 16 supplies fluid to the left hydraulic cylinder 12L. Likewise, the right valve 60R is arrangeable in a closed position, wherein the fluid supply 16 is prevented from supplying fluid to the right hydraulic cylinder 12L, 12R, and in an open position, wherein the fluid supply 16 supplies fluid to the right hydraulic cylinder 12R.

Now, that the fluid supply 16 has been described, an overview of the sensor (not shown) and control system (not shown) will be provided.

The sensor may be any suitable sensor or lateral slope indicator capable of detecting a right or left lateral slope condition of the utility vehicle 1. To this end, the sensor may include at least one accelerometer, pressure-based sensor and/ or GPS device. Such a sensor allows the utility vehicle 1 to adapt to a lateral tilt of the terrain automatically.

The control system is configured to control the fluid supply 16 to supply fluid to either one of the left and right hydraulic cylinders 12L, 12R, so as to apply a downward pressure on one of the wheels 3, based on the detected lateral slope condition if the sensor. To this end, the control system couples the fluid supply 16 to the rod end 26L, 26R of one of the hydraulic cylinders 12L, 12R supplies fluid thereto. The control system opens and closes the left and right valves 60L, 60R.

When the right lateral slope condition is detected, the control system arranges the left valve 60L in the open position and the right valve 60R in the closed position, as shown in Figure 3. In this way, hydraulic fluid is pumped into the rod end 26L, 26R of the left hydraulic cylinder 12L, and there is an increase in upward pressure on the left piston 28L, and a decrease a downward pressure on the left steerable wheel 3L. Due to the arrangement of the accumulators 14L, 14R on the rod ends 26L, 26R of the hydraulic cylinders 12L, 12R and the common conduit 40 between the hydraulic cylinders 12L, 12R, the increase in upward pressure on the left piston 28L, results in an increase in downward pressure on the right piston 28R, and hence an increase in downward pressure on the right steerable wheel 3R.

In this way, the left steerable wheel 3L is driven closer to the vehicle frame, while the right steerable wheel 3R is driven away from the vehicle frame 2. Accordingly, the weight of the vehicle is shifted from the right steerable wheel 3R towards the opposite wheel of the utility vehicle 1, i.e. towards the left non-steerable wheel 4L. As a result, this left non-steerable wheel 4L is better adhered to the ground, and the risk of lateral drift due to the right lateral slope condition is reduced.

Likewise, the control system is configured to arrange the right valve 60R in the open position and the left valve 60L in the closed position as shown in Figure 4, when the left lateral slope condition is detected. An increase in downward pressure on the left steerable wheel 3L is achieved for the same reasons, and the weight of the vehicle is shifted from the left steerable wheel 3L towards the right non-steerable wheel 4R. As a result, the right non-steerable wheel 4R is better adhered to the ground, and the risk of lateral drift due to the left lateral slope condition is reduced.

In this way, the control system can compensate for lateral sliding when the utility vehicle 1 is arranged on a lateral slope.

In one preferred embodiment, the sensor is configured to measure the inclination of the lateral slope when a lateral slope condition is detected. Furthermore, the control system can increase the pressure on the appropriate steerable wheel 3 based on the measured inclination of the lateral slope. Look up tables may be used to this end.

Additionally or alternatively, the utility vehicle 1 may be provided with a sensor in the form of an at least one input interface such as a graphical operator interface (GUI) or a button for operation by an operator of the utility vehicle 1. This at least one input interface is preferably arranged on a dashboard (not shown) where the operator of the utility vehicle 1 can operate it with ease. Depending on the lateral sliding experienced by the utility vehicle 1, the operator of the utility vehicle 1 can input the lateral slope condition of the utility vehicle 1 (i.e. in place of using a lateral slope indicator) into the input interface so as to compensate against said sliding associated therewith. On this basis, the control system will then compensate against the effects of the lateral sliding.

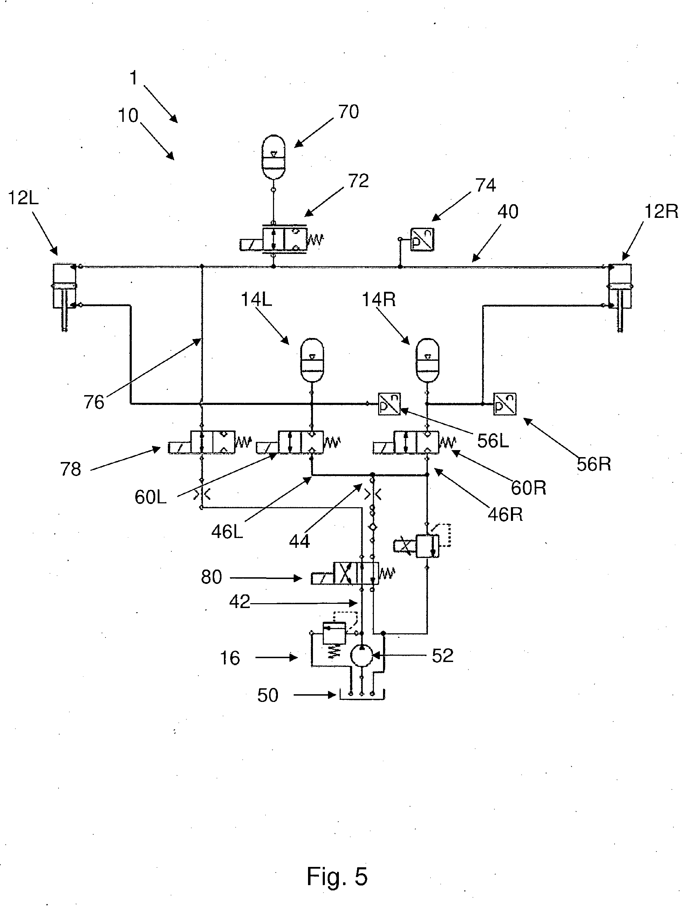

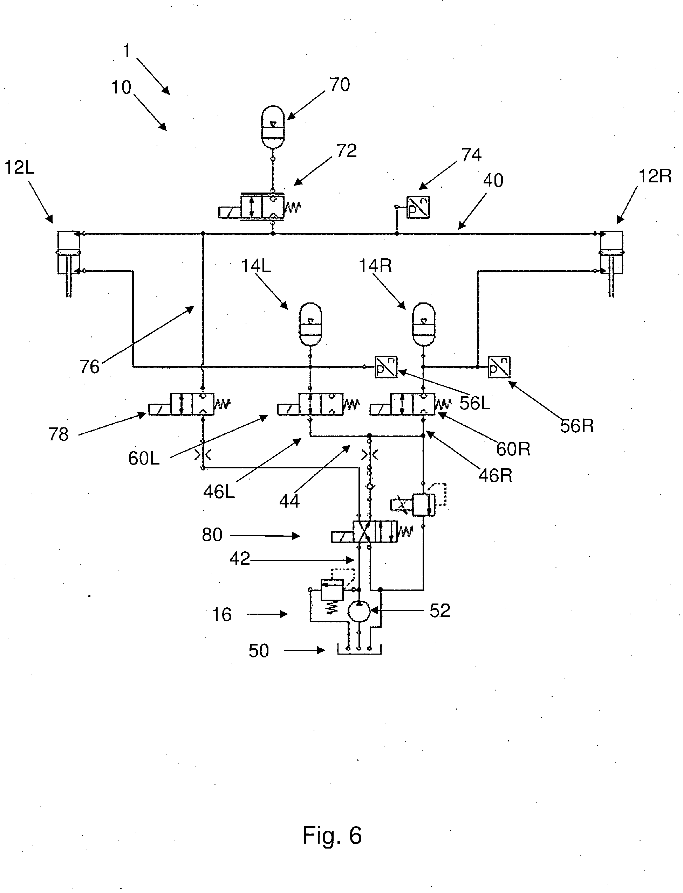

Figures 5 and 6 show an alternative embodiment of the hydraulic system 10 of Figures 3 and 4.

Here, the hydraulic system 10 is provided with a common accumulator 70 coupled to the common conduit 40, i.e. to both hydraulic cylinders 12L, 12R. Changes in stiffness across the hydraulic system 10 can made by adjusting the level of said common accumulator 70. An accumulator valve 72 is provided between the common accumulator 70 and common conduit 40 to allow selective coupling of the valve to the common conduit 40. A common pressure transducer 74 is provided on the common conduit 40 to protect said common accumulator 70.

To adjust said common accumulator 70 and hence the level of stiffness across the hydraulic system 10, the hydraulic system 10 is provided with a stiffness supply conduit 76 that extends between the common fluid supply 16 and the common conduit 40. A common valve 78 is arranged between the common fluid supply 16 and the common conduit 40 to control whether the hydraulic fluid is directed to the common conduit 40 or not.

When the common valve 78 and the accumulator valve 72 are both open, i.e. as shown in Figure 5, the fluid supply 16 pumps fluid into the common accumulator 70, thereby increasing the level of the accumulator 70, and adjusting the stiffness of the hydraulic system 10.

To switch between this stiffness adjusting mode and the slide compensating mode described above, the hydraulic system 10 is provided with a control mode valve 80 that acts on the common conduit 40. When the control mode valve 80 is in the stiffness adjusting mode, it directs hydraulic fluid towards the common valve 78, as shown in Figure 5. When the control mode valve 80 is arranged in a slide compensating mode, it directs hydraulic fluid to towards the left and right valves 60L, 60R, as shown in Figure 6.

Variations on the utility vehicle 1 described above will also be apparent to the skilled person that do not depart from the scope of the appended claims.

For example, the utility vehicle 1 may comprise more than four wheels 3, 4. The front wheels 3 may be the non-steerable wheels, and the rear wheels 4 steerable wheels.

## Claims

1. A utility vehicle (1) comprising:
a vehicle frame (2);
at least four wheels (3, 4) comprising left and right steerable wheels (3, 4) and left and right non-steerable wheels (3, 4);
a hydraulic system (10) comprising:
a left hydraulic cylinder (12L) coupling the left steerable wheel (3L, 4L) to the vehicle frame (2),
a right hydraulic cylinder (12R) coupling the right steerable wheel (3R, 4R) to the vehicle frame (2),
a left accumulator (14L) coupled to the left hydraulic cylinder (12L),
a right accumulator (14R) coupled to the right hydraulic cylinder (12R), and
a fluid supply (16) configured to supply fluid to either one of the left and right hydraulic cylinders (12L, 12R);
a sensor configured to detect a right lateral slope condition wherein the right non-steerable wheel (4R) is positioned below the left non-steerable wheel (4L),
and a control system is operably coupled to the sensor and to the hydraulic system (10), the control system being configured to increase a downward pressure on the right steerable wheel (3R, 4R) when the right lateral slope condition is detected by controlling the fluid supply (16) to supply fluid to either one of the left and right hydraulic cylinders (12L, 12R),
**characterized in that** hydraulic cylinders are only provided on the steerable wheels (3,4).

2. The utility vehicle (1) of Claim 1, wherein the control system is further configured to decrease a downward pressure on the left steerable wheel (3L, 4L) when the right lateral slope condition is detected.

3. The utility vehicle (1) of Claim 1 or 2, wherein the left and right hydraulic cylinders (12L, 12R) each comprise a head end (24L, 24R) and a rod end (26L, 26R), the left and right steerable wheels (3) being mechanically connected to the rod ends (26L, 26R) of the respective hydraulic cylinders (12L, 12R), the left and right accumulators (14L, 14R) being fluidly connected to the rod ends (26L, 26R) of the respective hydraulic cylinders (12L, 12R), and the head ends (24L, 24R) of the respective hydraulic cylinders (12L, 12R) being fluidly connected to each other,
the fluid supply (16) being couplable to the rod ends (26L, 26R) of the respective hydraulic cylinders (12L, 12R), and the control system being configured to couple the fluid supply (16) to the rod end (26L, 26R) of the left hydraulic cylinder (12L) and to supply fluid thereto, when the right lateral slope condition is detected.

4. The utility vehicle (1) of any preceding claim, wherein the hydraulic system (10) further comprises:
a right valve (60R) arrangeable in a closed position, wherein the fluid supply (16) is prevented from supplying fluid to the right hydraulic cylinder (12L, 12R), and in an open position, wherein the fluid supply (16) supplies fluid to the right hydraulic cylinder (12L, 12R), and
a left valve (60L) arrangeable in a closed position, wherein the fluid supply (16) is prevented from supplying fluid to the left hydraulic cylinder (12L), and in an open position, wherein the fluid supply (16) supplies fluid to the left hydraulic cylinder (12L).

5. The utility vehicle (1) of Claim **4,** wherein the control system is configured to arrange the left valve (60L) in the open position and the right valve (60R) in the closed position when the right lateral slope condition is detected.

6. The utility vehicle (1) of any of any preceding claims, wherein the fluid supply (16) comprises a store (50) of fluid, a pump (52) for delivering the fluid and a pressure relief valve (54) ensuring the pressure of the hydraulic system (10) does not exceed a threshold value.

7. The utility vehicle (1) of any of any preceding claims, wherein the hydraulic system (10) further comprises a common accumulator (70) coupled between both hydraulic cylinders (12L, 12R).

8. The utility vehicle (1) of any preceding claims, wherein the sensor comprises a lateral slope indicator or a GPS device.

9. The utility vehicle (1) of any preceding claims, wherein sensor is further configured to measure the inclination of the right lateral slope when the right lateral slope condition is detected, and wherein the increase in downward pressure on the right steerable wheel (3R, 4R) depends on the measured inclination of the right lateral slope.

10. The utility vehicle (1) of any preceding claims, wherein the utility vehicle comprises exactly four wheels.

11. The utility vehicle (1) of any preceding claims, wherein the utility vehicle is a grape harvester.

## Patentansprüche

1. Nutzfahrzeug (1), umfassend:
einen Fahrzeugrahmen (2);
mindestens vier Räder (3, 4), umfassend linke und rechte lenkbare Räder (3, 4) und linke und rechte nicht lenkbare Räder (3, 4);
eine Hydraulikanlage (10), umfassend:
einen linken Hydraulikzylinder (12L), der das linke lenkbare Rad (3L, 4L) mit dem Fahrzeugrahmen (2) koppelt,
einen rechten Hydraulikzylinder (12R), der das rechte lenkbare Rad (3R, 4R) mit dem Fahrzeugrahmen (2) koppelt,
einen linken Druckspeicher (14L), gekoppelt an den linken Hydraulikzylinder (12L),
einen rechten Druckspeicher (14R), gekoppelt an den rechten Hydraulikzylinder (12R), und
eine Fluidversorgung (16), die dazu ausgebildet ist, entweder dem linken oder dem rechten Hydraulikzylinder (12L, 12R) Fluid zuzuführen;
einen Sensor, der dazu konfiguriert ist, eine rechte seitliche Hangneigungsbedingung zu erfassen, bei der das rechte nicht lenkbare Rad (4R) unter dem linken nicht lenkbaren Rad (4L) positioniert ist,
und ein Steuersystem, das wirkfähig an den Sensor und an die Hydraulikanlage (10) gekoppelt ist, wobei das Steuersystem konfiguriert ist, einen Abwärtsdruck auf das rechte lenkbare Rad (3R, 4R) zu erhöhen, wenn die rechte seitliche Hangneigungsbedingung erfasst wird, indem es die Fluidversorgung (16) so steuert, dass Fluid einem von dem linken und dem rechten Hydraulikzylinder (12L, 12R) zugeführt wird, **dadurch gekennzeichnet, dass** Hydraulikzylinder nur an den lenkbaren Rädern (3,4) bereitgestellt sind.

2. Nutzfahrzeug (1) nach Anspruch 1, wobei das Steuersystem ferner dazu konfiguriert ist, einen Abwärtsdruck auf das linke lenkbare Rad (3L, 4L) zu verringern, wenn die rechte seitliche Hangneigungsbedingung erfasst wird.

3. Nutzfahrzeug (1) nach Anspruch 1 oder2, wobei der linke und der rechte Hydraulikzylinder (12L, 12R) jeweils ein Kopfende (24L, 24R) und ein Stangenende (26L, 26R) umfassen, wobei die linken und rechten lenkbaren Räder (3) mechanisch mit den Stangenenden (26L, 26R) der jeweiligen Hydraulikzylinder (12L, 12R) verbunden sind, die linken und rechten Druckspeicher (14L, 14R) fluidisch mit den Stangenenden (26L, 26R) der jeweiligen Hydraulikzylinder (12L, 12R) verbunden sind und die Kopfenden (24L, 24R) der jeweiligen Hydraulikzylinder (12L, 12R) fluidisch miteinander verbunden sind,
wobei die Fluidversorgung (16) mit den Stangenenden (26L, 26R) der jeweiligen Hydraulikzylinder (12L, 12R) koppelbar ist und das Steuersystem konfiguriert ist, die Fluidversorgung (16) mit dem Stangenende (26L, 26R) des linken Hydraulikzylinders (12L) zu koppeln und diesem Fluid zuzuführen, wenn die rechte seitliche Hangneigungsbedingung erfasst wird.

4. Nutzfahrzeug (1) nach einem der vorstehenden Ansprüche, wobei die Hydraulikanlage (10) ferner umfasst:
ein rechtes Ventil (60R), das in einer geschlossenen Position angeordnet werden kann, in der die Fluidversorgung (16) daran gehindert wird, dem rechten Hydraulikzylinder (12L, 12R) Fluid zuzuführen, und in einer offenen Position angeordnet werden kann, in der die Fluidversorgung (16) dem rechten Hydraulikzylinder (12L, 12R) Fluid zuführt, und
ein linkes Ventil (60L), das in einer geschlossenen Position angeordnet werden kann, in der die Fluidversorgung (16) daran gehindert wird, dem linken Hydraulikzylinder (12L) Fluid zuzuführen, und in einer offenen Position angeordnet werden kann, in der die Fluidversorgung (16) dem linken Hydraulikzylinder (12L) Fluid zuführt.

5. Nutzfahrzeug (1) nach Anspruch 4, wobei das Steuersystem konfiguriert ist, um das linke Ventil (60L) in der offenen Position und das rechte Ventil (60R) in der geschlossenen Position anzuordnen, wenn die rechte seitliche Hangneigungsbedingung erfasst wird.

6. Nutzfahrzeug (1) nach einem der vorstehenden Ansprüche, wobei die Fluidversorgung (16) einen Fluidvorrat (50), eine Pumpe (52) zum Fördern des Fluids und ein Druckbegrenzungsventil (54) umfasst, das sicherstellt, dass der Druck der Hydraulikanlage (10) einen Grenzwert nicht überschreitet.

7. Nutzfahrzeug (1) nach einem der vorstehenden Ansprüche, wobei die Hydraulikanlage (10) ferner einen gemeinsamen Druckspeicher (70) umfasst, der zwischen beide Hydraulikzylinder (12L, 12R) geschaltet ist.

8. Nutzfahrzeug (1) nach einem der vorstehenden Ansprüche, wobei der Sensor einen Anzeiger für seitliche Hangneigung oder eine GPS-Vorrichtung umfasst.

9. Nutzfahrzeug (1) nach einem der vorstehenden Ansprüche, wobei der Sensor ferner dafür konfiguriert ist, die rechte seitliche Hangneigung zu messen, wenn die rechte seitliche Hangneigungsbedingung erfasst wird, und wobei die Erhöhung des Abwärtsdrucks auf das rechte lenkbare Rad (3R, 4R) von der gemessenen Neigung des rechten Seitenhangs abhängt.

10. Das Nutzfahrzeug (1) nach einem der vorstehenden Ansprüche, wobei das Nutzfahrzeug genau vier Räder umfasst.

11. Nutzfahrzeug (1) nach einem der vorstehenden Ansprüche, wobei das Nutzfahrzeug eine Traubenerntemaschine ist.

## Revendications

1. Véhicule utilitaire (1) comprenant :
un châssis de véhicule (2) ;
au moins quatre roues (3, 4) comprenant des roues directrices gauche et droite (3, 4) et des roues non directrices gauche et droite (3, 4) ;
un système hydraulique (10) comprenant :
un vérin hydraulique gauche (12L) accouplant la roue directrice gauche (3L, 4L) au châssis de véhicule (2),
un vérin hydraulique droit (12R) accouplant la roue directrice droite (3R, 4R) au châssis de véhicule (2),
un accumulateur gauche (14L) accouplé au vérin hydraulique gauche (12L),
un accumulateur droit (14R) accouplé au vérin hydraulique droit (12R), et
une alimentation en fluide (16) conçue pour alimenter en fluide l'un ou l'autre des vérins hydrauliques gauche et droit (12L, 12R) ;
un capteur configuré pour détecter une condition de pente latérale droite, dans lequel la roue non directrice droite (4R) est positionnée en dessous de la roue non directrice gauche (4L),
et un système de commande est couplé de manière opérationnelle au capteur et au système hydraulique (10), le système de commande étant configuré pour augmenter une pression vers le bas sur la roue directrice droite (3R, 4R) lorsque la condition de pente latérale droite est détectée en commandant l'alimentation en fluide (16) pour qu'elle alimente en fluide l'un ou l'autre des vérins hydrauliques gauche et droit (12L, 12R), **caractérisé en ce que** des vérins hydrauliques sont prévus uniquement sur les roues directrices (3,4).

2. Véhicule utilitaire (1) selon la revendication 1, dans lequel le système de commande est en outre configuré pour diminuer une pression vers le bas sur la roue directrice gauche (3L, 4L) lorsque la condition de pente latérale droite est détectée.

3. Véhicule utilitaire (1) selon la revendication 1 ou 2, dans lequel les vérins hydrauliques gauche et droit (12L, 12R) comprennent chacun une extrémité de tête (24L, 24R) et une extrémité de tige (26L, 26R), les roues directrices gauche et droite (3) étant reliées mécaniquement aux extrémités de tige (26L, 26R) des vérins hydrauliques (12L, 12R) respectifs, les accumulateurs gauche et droit (14L, 14R) étant reliés fluidiquement aux extrémités de tige (26L, 26R) des vérins hydrauliques (12L, 12R) respectifs, et les extrémités de tête (24L, 24R) des vérins hydrauliques (12L, 12R) respectifs étant reliées fluidiquement l'une à l'autre, l'alimentation en fluide (16) pouvant être accouplée aux extrémités de tige (26L, 26R) des vérins hydrauliques (12L, 12R) respectifs, et le système de commande étant configuré pour coupler l'alimentation en fluide (16) à l'extrémité de tige (26L, 26R) du vérin hydraulique gauche (12L) et pour l'alimenter en fluide lorsque la condition de pente latérale droite est détectée.

4. Véhicule utilitaire (1) selon l'une quelconque revendication précédente, dans lequel le système hydraulique (10) comprend en outre :
une vanne droite (60R) pouvant être agencée dans une position fermée, dans lequel l'alimentation en fluide (16) est empêchée d'alimenter le vérin hydraulique droit (12L, 12R) en fluide, et dans une position ouverte, dans lequel l'alimentation en fluide (16) alimente en fluide le vérin hydraulique droit (12L, 12R), et
une vanne gauche (60L) pouvant être agencée dans une position fermée, dans lequel l'alimentation en fluide (16) est empêchée d'alimenter le vérin hydraulique gauche (12L) en fluide, et dans une position ouverte, dans lequel l'alimentation en fluide (16) alimente en fluide le vérin hydraulique gauche (12L).

5. Véhicule utilitaire (1) selon la revendication 4, dans lequel le système de commande est configuré pour agencer la vanne gauche (60L) dans la position ouverte et la vanne droite (60R) dans la position fermée lorsque la condition de pente latérale droite est détectée.

6. Véhicule utilitaire (1) selon l'une quelconque des revendications précédentes, dans lequel l'alimentation en fluide (16) comprend un réservoir (50) de fluide, une pompe (52) destinée à distribuer le fluide et une vanne de détente (54) garantissant que la pression du système hydraulique (10) ne dépasse pas une valeur seuil.

7. Véhicule utilitaire (1) selon l'une quelconque des revendications précédentes, dans lequel le système hydraulique (10) comprend en outre un accumulateur commun (70) accouplé entre les deux vérins hydrauliques (12L, 12R).

8. Véhicule utilitaire (1) selon l'une quelconque des revendications précédentes, dans lequel le capteur comprend un indicateur de pente latérale ou un dispositif GPS.

9. Véhicule utilitaire (1) selon l'une quelconque des revendications précédentes, dans lequel le capteur est en outre configuré pour mesurer l'inclinaison de la pente latérale droite lorsque la condition de pente latérale droite est détectée, et dans lequel l'augmentation de la pression vers le bas sur la roue directrice droite (3R, 4R) dépend de l'inclinaison mesurée de la pente latérale droite.

10. Véhicule utilitaire (1) selon l'une quelconque des revendications précédentes, dans lequel le véhicule utilitaire comprend exactement quatre roues.

11. Véhicule utilitaire (1) selon l'une quelconque des revendications précédentes, dans lequel le véhicule utilitaire est une vendangeuse.
